# EUROPÄISCHE PATENTSCHRIFT

(11) **EP 3 752 350 B1**
(45) Veröffentlichungstag und Bekanntmachung des Hinweises auf die Patenterteilung: **18.10.2023**
(21) Anmeldenummer: 19713345.7
(22) Anmeldetag: 12.02.2019
(51) Int. Cl.: B29D 30/06, B29C 35/00, B29C 35/04

(54) **VERFAHREN UND VORRICHTUNG ZUR VENTILSTEUERUNG SOWIE VERWENDUNG DER VORRICHTUNG IM BEREICH EINER REIFENHEIZPRESSE**
VALVE CONTROL METHOD AND DEVICE, AND USE OF THE DEVICE IN A TYRE VULCANISING PRESS
PROCÉDÉ ET DISPOSITIF POUR LA COMMANDE D'UNE SOUPAPE ET UTILISATION DU DISPOSITIF DANS UNE PRESSE DE VULCANISATION DE PNEUS

(30) Priorität: 12.02.2018 DE 102018001132
(43) Veröffentlichungstag der Anmeldung: 23.12.2020
(73) Patentinhaber: Harburg-Freudenberger Maschinenbau GmbH, 21079 Hamburg (DE)
(72) Erfinder: STÖHRMANN, Andreas, 25826 St. Peter-Ording (DE)
(74) Vertreter: Klickow & Wetzel PartGmbB
(86) Internationale Anmeldenummer: PCT/DE2019/000033
(87) Internationale Veröffentlichungsnummer: WO 2019/154452

(56) Entgegenhaltungen:
- EP-A1- 2 535 173
- WO-A1-2009/031493
- DE-A1- 3 308 138
- DE-U1-202013 101 969
- KR-A- 20040 042 132
- US-A1- 2012 301 565

## Beschreibung

Die Erfindung betrifft ein Verfahren zur Steuerung von Ventilen, die im Bereich von Leitungen für ein Fluid angeordnet sind, wobei mindestens ein erstes Ventil als im Bereich einer Primärleitung angeordnetes Schaltventil ausgebildet ist und wobei mindestens ein zweites Ventil als Regelventil ausgebildet ist.

Die Erfindung betrifft darüber hinaus eine Vorrichtung zur Steuerung von Ventilen, die im Bereich von Leitungen für ein Fluid angeordnet sind, wobei mindestens ein erstes Ventil als im Bereich einer Primärleitung angeordnetes Schaltventil ausgebildet ist und wobei mindestens ein zweites Ventil als Regelventil ausgebildet ist.

In einer Ausführungsform betrifft die Erfindung eine Heizpresse, die zur Heizung von Bauelementen oder Baugruppen eine Vorrichtung zur Steuerung von Ventilen aufweist.

Weiterhin betrifft die Erfindung die Verwendung der Vorrichtung zur Steuerung von Ventilen im Bereich einer Reifenheizpresse.

Entsprechende Verfahren und Vorrichtungen zur Steuerung von Ventilen werden in unterschiedlichen technischen Anlagen eingesetzt. Beispielsweise sind Anwendungen sowohl im Bereich von pneumatischen Systemen als auch im Bereich von hydraulischen Systemen bekannt.

Zur Zuführung einer vorgebbaren Menge des Fluids und/oder einer Zuführung des Fluids mit vorgebbarem Druck werden häufig Regelventile verwendet. Insbesondere bei komplexen und verzweigten Leitungssystemen führt die Verwendung derartiger Regelventile zu relativ hohen Kosten.

Aus Investitionsgründen wird die Anzahl der ein Regelventil verwendenden Regelkreise je Anlage oft unverhältnismäßig reduziert und eine Zusammenfassung von Regelkreisen ist erforderlich. Dieser Umstand bringt die Anlagenhersteller immer wieder in die Situation, dass ggfs. Temperaturgenauigkeiten gefordert werden, die nicht gewährleistet werden können.

Aus der EP 2535173 A1 ist bereits eine Vorrichtung zur Ventilsteuerung bekannt. Die Ventile sind im Bereich von Leitungen für ein Fluid angeordnet. Mindestens zwei Ventile sind jeweils im Bereich von Schaltventilen ausgebildet, die ihrerseits im Bereich einer Primärleitung angeordnet sind. Ein drittes Ventil ist als ein Regelventil ausgebildet.

Weitere Ventilanordnungen werden in der US 2012/301565 A1, der DE 202013101969 U1 sowie der WO 2009/031493 A1 beschrieben.

Aufgabe der vorliegenden Erfindung ist es, ein Verfahren der einleitend genannten Art derart zu verbessern, dass die entstehenden Kosten reduziert werden.

Eine weitere Aufgabe der vorliegenden Erfindung besteht darin, eine Vorrichtung der einleitend genannten Art derart zu konstruieren, dass ein reduzierter Herstellungsaufwand und reduzierte Herstellungskosten erreicht werden.

Die entsprechenden Aufgaben werden durch die Merkmale der unabhängigen Ansprüche 1, 8 und 9 gelöst.

Eine erfindungsgemäße Vorrichtung zur Ventilsteuerung weist mindestens eine Steuereinheit auf, mit der eine Mehrzahl von Ventilen ansteuerbar ist.

In verschiedenen Ausführungsformen der Erfindung sind die Ventile elektrisch und/oder pneumatisch und/oder hydraulisch mithilfe der mindestens einen Steuereinheit ansteuerbar.

Weiterhin weist eine erfindungsgemäße Vorrichtung zur Ventilsteuerung in einer Ausführungsform mindestens drei Ventile auf.

In einer erfindungsgemäßen Ausführungsform sind mithilfe der Vorrichtung zur Ventilsteuerung mindestens zwei Regelkreisen zugeordnete Ventile steuerbar, wobei die Regelkreise jeweils über mindestens eine Primärleitung bzw. einen Hauptkanal an eine zentrale Zuführeinrichtung eines Fluids gekoppelt sind. Im Bereich der Primärleitungen ist jeweils mindestens ein Schaltventil bzw. Steuerventil angeordnet, dessen binäre Zustände "auf" und "zu" mithilfe der Steuereinheit einstellbar sind, sodass eine Zufuhr des Fluids zu einem Regelkreis über die jeweilige(n) Primärleitung(en) ein- oder ausschaltbar ist.

Das Fluid ist beispielsweise als ein wärmeführendes Fluid in Form von Sattdampf, Heißdampf, Wasser, Öl, Gas, Weißwasser oder als ein Gemisch davon gegeben. Die Regelkreise sind in diesem Fall durch Heizkreise gegeben.

Als Regelkreise sind erfindungsgemäß jedoch auch andere Anwendungen, beispielsweise Kühlkreise denkbar, wobei das Fluid dementsprechende Eigenschaften, beispielsweise die eines Kältemittels, aufweist.

In einer erfindungsgemäßen Ausführungsform einer Vorrichtung zur Ventilsteuerung sind darüber hinaus Ventile in Sekundärleitungen bzw. Zusatzkanälen ansteuerbar. Die Sekundärleitungen bzw. Zusatzkanäle münden jeweils an einem Summierpunkt in eine mit einem Regelkreis verbundene Primärleitung ein.

In einer Ausführungsform der Erfindung sind die nicht in die Primärleitungen mündenden Enden der Sekundärleitungen miteinander verbunden. An diesen Verbindungspunkt schließt mindestens eine Sekundärversorgungsleitung an, die mit der zentralen Zuführeinrichtung eines Fluids verbunden ist.

Im Bereich der Sekundärleitungen ist in einer Ausführungsform der Erfindung jeweils mindestens ein Ventil angeordnet, das vorzugsweise als ein Schaltventil ausgebildet ist.

Im Bereich der Sekundärversorgungsleitung ist in einer Ausführungsform der Erfindung mindestens ein Ventil angeordnet, das als ein Schaltventil oder als ein Regelventil ausgebildet ist.

In einer bevorzugten Ausführungsform der Erfindung ist mindestens eines der Ventile bzw. der ansteuerbaren Ventile als ein Regel- bzw. als ein Stellventil ausgebildet, dessen Öffnungsgrad mithilfe der Steuereinheit einstellbar ist.

In einer besonders bevorzugten Ausführungsform der Erfindung ist das mindestens eine im Bereich der mindestens einen Sekundärversorgungsleitung angeordnete Ventil als ein Regelventil ausgebildet, sodass der Volumenstrom des durch die Sekundärversorgungsleitung strömenden Fluids regelbar ist.

In einer Ausführungsform der Erfindung sind die Ventile derart ansteuerbar, dass über die mindestens eine einem Regelkreis zugeordnete Sekundärleitung ein zusätzlicher Volumenstrom des Fluids in die jeweilige Primärleitung zuführbar ist.

In einer Ausführungsform der Erfindung weist die Vorrichtung mindestens einen Temperatursensor auf.

In einer bevorzugten Ausführungsform der Erfindung ist jedem Regelkreis mindestens ein Sensor zugeordnet.

Im Falle der Temperaturregelung von Regelkreisen in Form von Heizkreisen oder Kühlkreisen, ist mindestens ein einem Regelkreis zugeordneter Sensor als ein Temperatursensor ausgebildet.

In einer bevorzugten Ausführungsform der Erfindung ist der Messwert des mindestens einen einem Regelkreis zugeordneten Sensors auslesbar und die ermittelten Messwerte zur Steuerung der dem jeweiligen Regelkreis zugeordneten Ventile auswertbar.

In einer besonders bevorzugten Ausführungsform der Erfindung weist diese einen Regler auf, mit dem die Temperatur in mindestens einem Regelkreis regelbar ist, indem die aus dem mindestens einen einem Regelkreis zugeordneten Temperatursensor ausgelesenen Messwerte mit einem Sollwert verglichen werden und die dem entsprechenden Regelkreis zugeordneten Ventile sowie das mindestens eine im Bereich der Sekundärversorgungsleitung angeordnete Ventil ansteuerbar sind.

Der Regler ist in einer Ausführungsform der Erfindung als ein P-Regler oder als ein PI-Regler ausgebildet.

In einer bevorzugten Ausführungsform der Erfindung ist der Regler als ein PID-Regler ausgebildet.

In einer besonders bevorzugten Ausführungsform der Erfindung weist diese mindestens zwei Regler auf, von denen mindestens ein erster Regler die Fluidzufuhr zu den Regelkreisen über die jeweilige(n) Primärleitung(en) regelt und mindestens ein weiterer Regler die Fluidzufuhr zu den Regelkreisen über die Sekundärversorgungsleitung und die jeweilige(n) Sekundärleitung(en) regelt.

In einer Ausführungsform der Erfindung ist der mindestens eine erste Regler als ein P-Regler und der mindestens eine weitere Regler als ein PID-Regler ausgeführt, der in einer besonders bevorzugten erfindungsgemäßen Ausführungsform sequentiell zuschaltbar ist.

In einer Ausführungsform der Erfindung ist mindestens eine Primärleitung und/oder mindestens eine Sekundärleitung und/oder mindestens einer Sekundärversorgungsleitung und/oder mindestens eine Zuführeinrichtung für ein Fluid und/oder mindestens ein Regelkreis Teil der erfindungsgemäßen Vorrichtung.

Gemäß einer erfindungsgemäßen Ausführungsform einer Vorrichtung zur Ventilsteuerung wird als ein zentrales Bauelement ein metallischer Block verwendet, der mit Haupt- und Zusatzkanälen versehen ist, wobei die Zusatzkanäle gemäß der vorstehenden Beschreibung in die Hauptkanäle einmünden.

Der Block kann beispielsweise aus Stahl, insbesondere aus Edelstahl, oder Aluminium hergestellt sein. Bevorzugt ist insbesondere eine Herstellung aus Edelstahl, da in der Praxis das Problem der Kavitation auftritt, was dazu führt, dass Metallteile in den Kanälen abgetragen werden. Edelstahl, beispielsweise aus Austenit, erweist sich hier als besonders beständig.

Eine erfindungsgemäße Heizpresse weist mindestens eine erfindungsgemäße Vorrichtung zur Ventilsteuerung in einer der zuvor beschriebenen Ausführungsformen auf. Die Regelkreise sind in diesem Fall bevorzugt als Heizkreise ausgeführt und das Fluid ist als ein wärmeführendes Fluid ausgebildet.

Ein erfindungsgemäßes Verfahren zur Ventilsteuerung umfasst in einer Ausführungsvariante zumindest die folgenden Schritte:
1. Ansteuerung der im Bereich der Primärleitungen angeordneten Ventile ("auf" oder "zu")
2. Auslesen der Sensormesswerte aus den den Regelkreisen zugeordneten Sensoren,
3. Vergleich der Sensormesswerte (Istwerte) mit den den Regelkreisen zugeordneten Sollwerten,
4. Ansteuerung der in den Sekundärleitungen angeordneten Ventile, sodass mindestens ein Ventil im Bereich mindestens einer Sekundärleitung geöffnet ist,
5. Ansteuerung des mindestens einen im Bereich der Sekundärversorgungsleitung angeordneten Ventils zur Einstellung des Volumenstroms in der Sekundärversorgungsleitung.

In einer vorteilhaften Ausführungsvariante umfasst ein erfindungsgemäßes Verfahren zur Ventilsteuerung zusätzlich den Schritt der Bestimmung des Regelkreises mit der größten Abweichung von Ist- und Sollwert, wobei die Ansteuerung der in den Sekundärleitungen angeordneten Ventile gemäß Schritt 5 derart erfolgt, dass nur das mindestens eine Ventil in der dem Regelkreis mit der größten Abweichung zugeordneten Sekundärleitung geöffnet ist.

In einer erfindungsgemäßen Ausführungsvariante des Verfahrens zur Steuerung von Ventilen sind Ventile im Bereich von Leitungen für ein Fluid angeordnet, wobei das Fluid durch jeweils mindestens eine Primärleitung einem zugeordneten Regelkreis zugeführt und dadurch eine Regelgröße des Regelkreises beeinflusst wird. In einem Verfahrensschritt werden die vorliegenden Werte der Regelgröße in dem jeweiligen Regelkreis mithilfe eines Sensors erfasst und es wird in einem weiteren Verfahrensschritt die Abweichung des Istwertes der Regelgröße von einem Sollwert bestimmt. Eine Regelung der Steuerung der einem Regelkreis zugeordneten Ventile erfolgt in Abhängigkeit der Regelgröße und die Ventile werden mithilfe einer Steuereinheit angesteuert, sodass durch die Leitungen, in denen die jeweiligen Ventile angeordnet sind, entsprechend der Ventilzustände das Fluid strömt. Weiterhin sind zwei als Schaltventile ausgebildete Ventile jeweils in einer Primärleitung und mindestens ein Regelventil in mindestens einer Sekundärversorgungsleitung und jeweils mindestens ein als ein Schaltventil ausgebildetes Ventil in jeweils einer aus der Sekundärversorgungsleitung abzweigenden Sekundärleitung angeordnet. In jeweils einem Verfahrensschritt werden die in den Primärleitungen angeordneten Ventile in dem Sinne angesteuert, dass diese geöffnet oder geschlossen werden, und in einem weiteren Verfahrensschritt wird mindestens eines der in einer Sekundärleitung angeordneten Ventile geöffnet. In einem weiteren Verfahrensschritt wird das Regelventil zur Einstellung des durch die Sekundärversorgungsleitung strömenden Volumenstromes des Fluids angesteuert, sodass sich der Volumenstrom des Fluids durch die Sekundärversorgungsleitung mit dem Volumenstrom des Fluids durch mindestens eine Primärleitung für mindestens einen Regelkreis addiert.

In einer bevorzugten Variante verwendet das erfindungsgemäße Verfahren zur Ventilsteuerung eine erfindungsgemäße Vorrichtung zur Ventilsteuerung.

In einer bevorzugten Variante findet das erfindungsgemäße Verfahren zur Ventilsteuerung im Bereich einer Reifenheizpresse Verwendung.

Es ist jedoch auch an eine Verwendung der erfindungsgemäßen Vorrichtung und/oder des erfindungsgemäßen Verfahrens in anderen Bereichen des Anlagenbaus, für Einzelmaschinen oder im Bereich der temperaturgeführten Prozesstechnik, wie beispielsweise bei Extrudern, gedacht.

Mithilfe eines erfindungsgemäßen Verfahrens und einer erfindungsgemäßen Vorrichtung zur Ventilsteuerung ist eine verbesserte Genauigkeit und Geschwindigkeit der Temperaturregelung mehrerer Heizkreise insbesondere dann ermöglicht, wenn im Bereich der mindestens einen Sekundärversorgungsleitung mindestens ein Regelventil verwendet ist.

Im Vergleich zur Verwendung von mindestens einem Regelventil für jeweils einen Heizkreis sind weiterhin die Herstellungskosten reduziert.

In den Zeichnungen sind beispielhafte Ausführungsformen der Erfindung schematisch dargestellt. Es zeigen:
- Fig. 1: ein vereinfachtes Schaltbild zur Verwendung eines Regelventils sowie einer Mehrzahl von Schaltventilen und
- Fig. 2: ein Schaltbild gemäß Figur 1 mit zusätzlichen Details bezüglich der Steuereinheit/den Reglern der Vorrichtung.

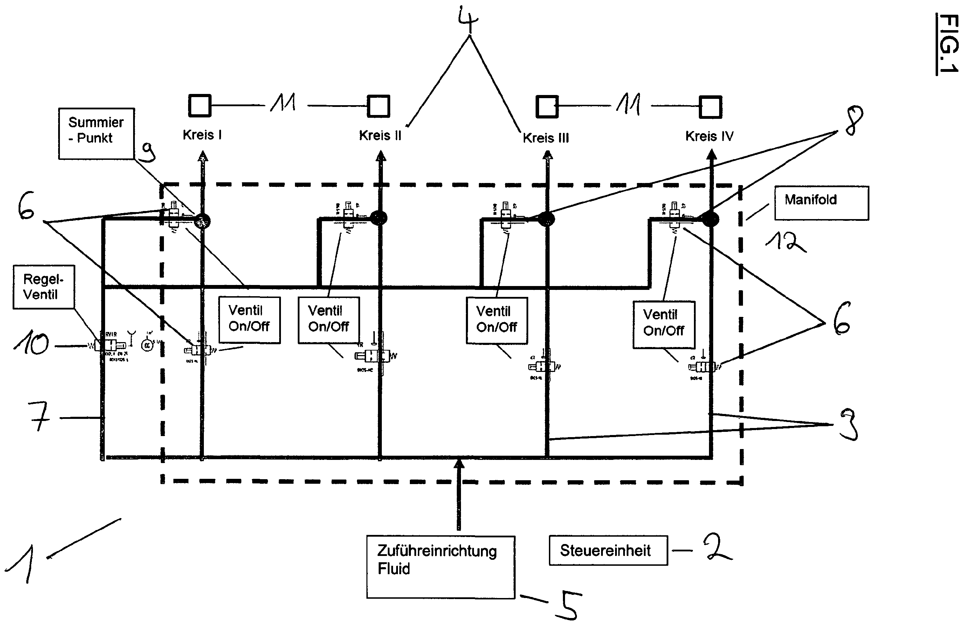

In Figur 1 ist ein Schaltbild einer erfindungsgemäßen Vorrichtung zur Ventilsteuerung (1) schematisch dargestellt. Die Vorrichtung zur Ventilsteuerung (1) weist eine zentrale Steuereinheit (2) auf. Darüber hinaus weist die Vorrichtung zur Ventilsteuerung (1) vier Primärleitungen (3) auf. Jeweils eine Primärleitung (3) verbindet dabei einen zugeordneten Regelkreis (4) mit einer zentralen Zuführeinrichtung für ein Fluid (5).

Im Bereich der Primärleitungen (3) ist jeweils ein als ein Schaltventil ausgebildetes Ventil (6) angeordnet, das mithilfe der Steuereinheit (2) zu öffnen und zu verschließen ist. Ist das jeweilige Ventil (6) geöffnet, strömt das Fluid durch die jeweiligen Primärleitung (3) hindurch in den jeweiligen Regelkreis (4).

Von der zentralen Zuführeinrichtung eines Fluids (5) zweigt neben den Primärleitungen (3) eine Sekundärversorgungsleitung (7) ab, die sich in vier Sekundärleitungen (8) verzweigt. Jede der Sekundärleitungen (8) mündet an einem Summierpunkt (9) in jeweils eine Primärleitung (3) ein. Somit ist jedem der Regelkreise (4) eine Sekundärleitung (8) zugeordnet.

Im Bereich der Sekundärleitungen (8) ist jeweils ein als ein Schaltventil ausgebildetes Ventil (6) angeordnet. Mithilfe der Steuereinheit (2) ist jedes der im Bereich der Sekundärleitungen (8) angeordneten Ventile (6) individuell ansteuerbar, sodass diese zu öffnen und zu verschließen sind.

Im Bereich der Sekundärversorgungsleitung (7) ist ein als ein Regelventil (10) ausgebildetes Ventil (6) angeordnet. Das Regelventil (10) ist mithilfe der Steuereinheit (2) ansteuerbar, sodass der Volumenstrom des Fluids durch die Sekundärversorgungsleitung (7) in einem Bereich zwischen dem bei einem vollständig geschlossenen und dem bei einem vollständig geöffneten Regelventil (10) vorliegenden Volumenstrom einstellbar ist.

Durch die Ansteuerung der Ventile (6) in den Sekundärleitungen (8) und des Regelventils (10) in der Sekundärversorgungsleitung (7) ist somit in jeder der Primärleitungen (3) am Summierpunkt (9) ein definierter zusätzlicher Volumenstrom des Fluids einleitbar.

Im Bereich der Regelkreise (4) ist zu jedem Regelkreis (4) zugeordnet mindestens ein Sensor (11) angeordnet, mit dem die im Bereich des Regelkreises (4) vorliegende Regelgröße direkt oder indirekt erfassbar ist.

Die mithilfe der Sensoren (11) erfassten Messwerte sind mithilfe der Steuereinheit (2) auswertbar, sodass mithilfe der Steuereinheit (2) über die Ansteuerung der Ventile (6, 10) eine Regelung der Regelkreise realisiert ist.

Die Hauptkanäle (3) und die Zusatzkanäle (8) sind in einen Block (12) integriert, der beispielsweise aus Edelstahl gefertigt ist.

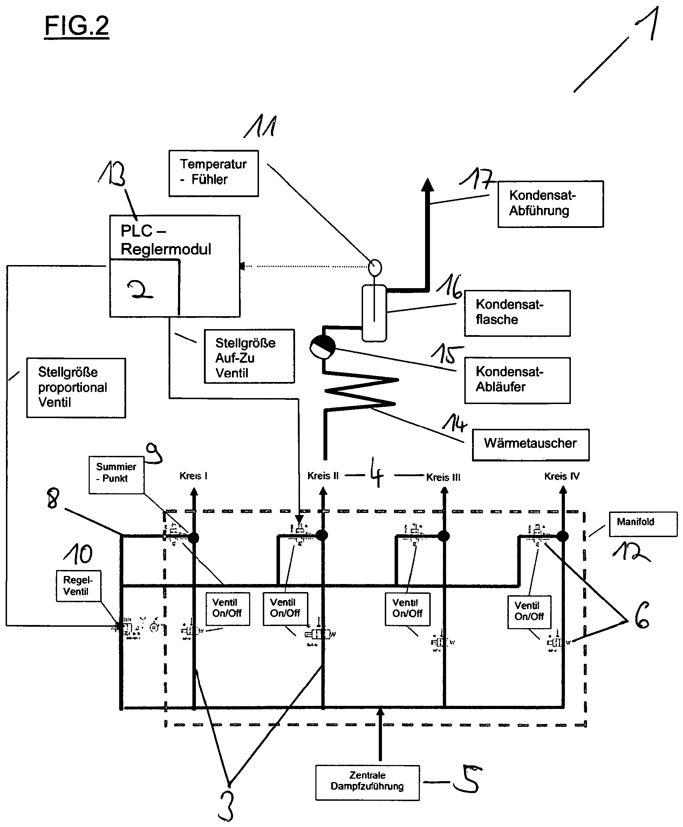

Figur 2 zeigt zusätzlich zu Figur 1 den Aufbau und den funktionalen Zusammenhang von Elementen der Steuereinheit (2) am Beispiel einer zur Temperaturregelung von Heizkreisen ausgebildeten Vorrichtung zur Ventilsteuerung (1).

Die Steuereinheit (2) weist einen Regler (13), beispielsweise ausbildet als ein PLC-Reglermodul, auf.

Im Bereich der als Heizkreise ausgebildeten Regelkreise (4) ist jeweils ein Wärmetauscher (14) angeordnet. Über einen Kondensatabläufer (15) wird das Kondensat zu einem als eine Kondensatflasche ausgebildeten Kondensatbehälter (16) abgeleitet. Von dem Kondensatbehälter (16) geht die Kondensatabführung (17) ab.

Mithilfe jeweils eines Temperatursensors (11) bzw. Temperaturfühlers ist im Bereich eines Kondensatbehälters (16) die Temperatur des Kondensats erfassbar.

Die Temperaturmesswerte der Temperatursensoren (11) sind mithilfe der Steuereinheit (2) auslesbar und an den Regler (13) übermittelbar.

Nachfolgend erfolgt am Beispiel einer Anwendung für Reifenheizpressen eine Erläuterung der erfindungsgemäßen Prinzipien. Im Ergebnis wird erfindungsgemäß eine preiswerte Multiplex-Regelung der Temperatur in mehreren Heizkreisen bereitgestellt.

Für die Außenheizung der Reifenheizpresse werden diverse Heizkreise benötigt. Je nach Kundenforderung oder auch zur Reduzierung der Risiken des Anlagenherstellers werden 2 bis 8 Regelkreise pro Presse eingesetzt. Die Regelkreise pro Kavität im Einzelnen sind beispielhaft:
- 1.: Heizplatte "Oben"
- 2.: Heizplatte "Unten"
- 3.: Mold (Form)
- 4.: Untere Mold-Schale
- 5.: Sonderlösungen für weitere Heizkreise

Die einzelnen Heizkreise werden über die Hauptkanäle mit dem wärmeführenden Fluid versorgt und beheizen so das jeweilige Bauelement / die jeweilige Baugruppe der Heizpresse.

Die Temperatur der Heizkreise wird mithilfe von Temperatursensoren erfasst und durch die Steuereinheit mit dem jeweiligen Sollwert verglichen. Die Basisregelung der Heizkreistemperaturen erfolgt mithilfe einer mit dem Regler implementierten P- oder PI-Regelung durch öffnen und schließen der Ventile in den Hauptkanälen.

Auf diese Basisregelung ist über die Zusatzkanäle eine zusätzliche Regelung zuschaltbar. Diese zusätzliche Regelung ist in einer Ausführungsform der Erfindung durch eine mit dem Regler implementierte PID-Regelung gegeben, die die Ansteuerung eines Regelventils zur Steuerung des Volumenstroms des wärmeführenden Fluids in der Sekundärversorgungsleitung vorgibt.

In einer Ausführungsform der Erfindung wird jeweils der Heizkreis mit der größten Abweichung zwischen Soll- und Istwert ermittelt und durch Zuschalten der zusätzlichen Regelung angenähert.

Dadurch wird bei jeweils einem Heizkreis die Basisregelung ("On/Off"-Regelung) mit einer PID-Regelung überlagert.

Es werden dabei PID-Regler eingesetzt, deren Anspruch an eine präzise Regelung gewährleistet ist. Es ist aber erfindungsgemäß auch daran gedacht, dass mithilfe eines PI- oder eines P-Reglers die Zielsetzung einer ausreichend genauen Regelung mit Zugeständnissen erfüllt wird. Der wesentliche Charakter der langsamen Pressenregelung liegt in der Totzeit, bedingt durch die große Masse des Körpers und der zu regelnden Temperatur.

In einer beispielhaften Ausführungsform der Erfindung wurden einer Ventilbank vier Regelkreise angelegt, die nach dem Prinzip der "On/Off"-Regelung arbeiten. Jeder Regler hat seinen eigenen Software-Regelkreis. Durch eine Subroutine in dem Regelprogramm wird immer der Regelkreis ausgewählt, der die größte Regelabweichung hat. Auf dem ausgewählten Regelkreis wird der PID-Regler im Summierpunkt aufgeschaltet, um Temperaturabweichungen zu reduzieren. Dies erfolgt im Wechsel der Heizkreise je nach Anforderung

## Patentansprüche

1. Vorrichtung zur Ventilsteuerung (1), wobei die Ventile (6, 10) im Bereich von Leitungen für ein Fluid angeordnet sind, wobei mindestens zwei Ventile (6) als jeweils im Bereich von einer Primärleitung (3) angeordnete Schaltventile ausgebildet sind, wobei mindestens ein drittes Ventil (6) als ein Regelventil (10) ausgebildet ist, **dadurch gekennzeichnet, dass** das mindestens eine Regelventil (10) in mindestens einer Sekundärversorgungsleitung (7) angeordnet ist und dass in einer Strömungsrichtung hinter dem mindestens einen Regelventil (10) mindestens eine Verzweigung angeordnet ist und dass sich hinter der Verzweigung mindestens zwei Sekundärleitungen (8) erstrecken, wobei jede Sekundärleitung (8) mindestens ein als ein Schaltventil ausgebildetes Ventil (6) aufweist und wobei die Ventile (6, 10) mit einer Steuereinheit (2) verbunden sind und die Funktion der Ventile (6) mithilfe der Steuereinheit (2) steuerbar ist.

2. Vorrichtung nach Patentanspruch 1, **dadurch gekennzeichnet, dass** die Ventile (6, 10) zur Steuerung von Heißdampf, Sattdampf, Wärmeträger- und/oder Kälteträger-Fluid ausgebildet sind.

3. Vorrichtung nach Anspruch 2, **dadurch gekennzeichnet, dass** durch die Kombination der Anordnung der Ventile (6, 10) und der Steuereinheit (2) für mindestens einen Regelkreis (4) die Kombination einer P-Regelung sowie einer sequenziellen Pl- oder PID-Regelung ausgebildet ist.

4. Vorrichtung nach mindestens einem der vorstehenden Ansprüche, **dadurch gekennzeichnet, dass** diese zu jedem Regelkreis (4) mindestens einen zugeordneten Sensor (11) aufweist.

5. Vorrichtung nach Anspruch 4, **dadurch gekennzeichnet, dass** der Sensor (11) als ein Temperatursensor ausgebildet ist.

6. Vorrichtung nach mindesten einem der vorstehenden Ansprüche, **dadurch gekennzeichnet, dass** diese einen Regler zur Umsetzung einer P- und/oder einer PI- und/oder einer PID-Regelung zur Steuerung der Ventilzustände aufweist.

7. Heizpresse zur Vulkanisation von Reifen, **dadurch gekennzeichnet, dass** diese eine Vorrichtung zur Ventilsteuerung (1) nach einem der Ansprüche 1 bis 5 zur Steuerung der Heizung von mindestens zwei Baugruppen der Heizpresse aufweist.

8. Verwendung einer Vorrichtung nach einem der Ansprüche 1 und 2 im Bereich einer Reifenheizpresse.

9. Verfahren zur Steuerung von Ventilen (6, 10), wobei Ventile (6, 10) im Bereich von Leitungen für ein Fluid angeordnet sind, wobei das Fluid durch jeweils mindestens eine Primärleitung (3) einem zugeordneten Regelkreis (4) zugeführt wird und eine Regelgröße des Regelkreises (4) beeinflusst und wobei in einem Verfahrensschritt die vorliegenden Werte der Regelgröße in dem jeweiligen Regelkreis (4) mithilfe eines Sensors (11) direkt oder indirekt erfassbar sind und wobei die Abweichung des Istwertes der Regelgröße von einem Sollwert bestimmt wird und wobei eine Regelung der Steuerung der einem Regelkreis (4) zugeordneten Ventile (6, 10) in Abhängigkeit der Regelgröße erfolgt und wobei die Ventile (6, 10) mithilfe einer Steuereinheit (2) angesteuert werden, sodass durch die Leitungen, in denen die jeweiligen Ventile (6, 10) angeordnet sind, entsprechend der Ventilzustände das Fluid strömt, **dadurch gekennzeichnet, dass** mindestens zwei als Schaltventile ausgebildete Ventile (6) jeweils in einer Primärleitung (3) und mindestens ein Regelventil (10) in mindestens einer Sekundärversorgungsleitung (7) und jeweils mindestens ein als ein Schaltventil ausgebildetes Ventil (6) in jeweils einer aus der Sekundärversorgungsleitung (7) abzweigenden Sekundärleitung (8) angeordnet sind und wobei in jeweils einem Verfahrensschritt die in den Primärleitungen (3) angeordneten Ventile (6) angesteuert werden, in dem Sinne, dass diese geöffnet oder geschlossen werden, und in einem weiteren Verfahrensschritt mindestens eines der in einer Sekundärleitung (8) angeordneten Ventile (6) geöffnet wird und in einem weiteren Verfahrensschritt das Regelventil (10) zur Einstellung des durch die Sekundärversorgungsleitung (7) strömenden Volumenstromes des Fluids angesteuert wird, sodass sich der Volumenstrom des Fluids durch die Sekundärversorgungsleitung mit dem Volumenstrom des Fluids durch mindestens eine Primärleitung (3) für mindestens einen Regelkreis (4) addiert.

10. Verfahren nach Anspruch 9, **dadurch gekennzeichnet, dass** in einem Verfahrensschritt der Regelkreis (4) mit der größten Abweichung von Soll- und Istwert bestimmt wird und dass in einem darauf folgenden Verfahrensschritt nur das mindestens eine, diesem Regelkreis (4) zugeordnete in einer Sekundärleitung (8) angeordnete Ventil (6) geöffnet wird.

11. Verfahren nach mindestens einem der Ansprüche 9 und 10, **dadurch gekennzeichnet, dass** die Ansteuerung der Ventilzustände der in den Primärleitungen angeordneten Ventile über eine P-Regelung erfolgt und dass die Ansteuerung des Ventilzustandes des mindestens einen in der Sekundärversorgungsleitung (7) angeordneten Regelventils (10) über eine PI- oder eine PID-Regelung erfolgt.

12. Verfahren nach mindestens einem der Ansprüche 9 bis 11, **dadurch gekennzeichnet, dass** eine Temperaturregelung der Regelkreise vorgenommen wird.

13. Verfahren nach mindestens einem der Ansprüche 9 bis 12, **dadurch gekennzeichnet, dass** eine Vorrichtung nach einem der Ansprüche 1 bis 6 verwendet ist.

## Claims

1. Valve control device (1), wherein the valves (6, 10) are arranged in the region of lines for a fluid, wherein at least two valves (6) are each in the form of switching valves arranged in the region of a primary line (3), wherein at least one third valve (6) is in the form of a closed-loop control valve (10), **characterized in that** the at least one closed-loop control valve (10) is arranged in at least one secondary supply line (7), and **in that** at least one branch is arranged downstream of the at least one closed-loop control valve (10) in a direction of flow, and **in that** at least two secondary lines (8) extend downstream of the branch, wherein each secondary line (8) has at least one valve (6) in the form of a switching valve, and wherein the valves (6, 10) are connected to a control unit (2), and the function of the valves (6) can be controlled with the aid of the control unit (2).

2. Device according to Patent Claim 1, **characterized in that** the valves (6, 10) are designed to control superheated steam, saturated steam, heat transfer fluid and/or refrigeration transfer fluid.

3. Device according to Claim 2, **characterized in that** the combination of a P closed-loop control system and a sequential PI or PID closed-loop control system is formed by combining the arrangement of the valves (6, 10) and the control unit (2) for at least one closed-loop control circuit (4).

4. Device according to at least one of the preceding claims, **characterized in that** it has at least one assigned sensor (11) for each closed-loop control circuit (4) .

5. Device according to Claim 4, **characterized in that** the sensor (11) is in the form of a temperature sensor.

6. Device according to at least one of the preceding claims, **characterized in that** it has a closed-loop controller for implementing a P and/or PI and/or PID closed-loop control system for controlling the valve states.

7. Heating press for vulcanizing tyres, **characterized in that** it has a valve control device (1) according to one of Claims 1 to 5 for controlling the heating of at least two assemblies of the heating press.

8. Use of a device according to either of Claims 1 and 2 in the region of a tyre heating press.

9. Method for controlling valves (6, 10), wherein valves (6, 10) are arranged in the region of lines for a fluid, wherein the fluid is supplied to an assigned closed-loop control circuit (4) through at least one primary line (3) in each case and influences a closed-loop control variable of the closed-loop control circuit (4), and wherein the available values of the closed-loop control variable can be directly or indirectly captured in the respective closed-loop control circuit (4) with the aid of a sensor (11) in a method step, and wherein the difference between the actual value of the closed-loop control variable and a desired value is determined, and wherein the control of the valves (6, 10) assigned to a closed-loop control circuit (4) is controlled in a closed-loop manner on the basis of the closed-loop control variable, and wherein the valves (6, 10) are actuated with the aid of a control unit (2), with the result that the fluid flows through the lines in which the respective valves (6, 10) are arranged according to the valve states, **characterized in that** at least two valves (6) in the form of switching valves are respectively arranged in a primary line (3) and at least one closed-loop control valve (10) is arranged in at least one secondary supply line (7) and at least one valve (6) in the form of a switching valve is respectively arranged in a respective secondary line (8) branching off from the secondary supply line (7), and wherein the valves (6) arranged in the primary lines (3) are actuated in a respective method step in the sense that they are opened or closed, and at least one of the valves (6) arranged in a secondary line (8) is opened in a further method step, and the closed-loop control valve (10) is actuated in a further method step in order to adjust the volumetric flow of the fluid flowing through the secondary supply line (7), with the result that the volumetric flow of the fluid through the secondary supply line is added to the volumetric flow of the fluid through at least one primary line (3) for at least one closed-loop control circuit (4).

10. Method according to Claim 9, **characterized in that** the closed-loop control circuit (4) with the greatest difference between the desired value and the actual value is determined in a method step, and **in that** only the at least one valve (6) assigned to this closed-loop control circuit (4) and arranged in a secondary line (8) is opened in a subsequent method step.

11. Method according to at least one of Claims 9 and 10, **characterized in that** the valve states of the valves arranged in the primary lines are actuated using a P closed-loop control system, and **in that** the valve state of the at least one closed-loop control valve (10) arranged in the secondary supply line (7) is actuated using a PI or a PID closed-loop control system.

12. Method according to at least one of Claims 9 to 11, **characterized in that** closed-loop temperature control of the closed-loop control circuits is carried out.

13. Method according to at least one of Claims 9 to 12, **characterized in that** a device according to one of Claims 1 to 6 is used.

## Revendications

1. Dispositif de commande de soupapes (1), dans lequel les soupapes (6, 10) sont disposées dans la zone de conduites destinées à un fluide, dans lequel au moins deux soupapes (6) sont réalisées comme des soupapes de commutation disposées respectivement dans la zone d'une conduite primaire (3), dans lequel au moins une troisième soupape (6) est réalisée sous forme de soupape de régulation (10),
**caractérisé en ce que** ladite au moins une soupape de régulation (10) est disposée dans au moins une conduite d'alimentation secondaire (7), et **en ce qu'**au moins une jonction est disposée dans une direction d'écoulement en aval de ladite au moins une soupape de régulation (10), et **en ce qu'**au moins deux conduites secondaires (8) s'étendent en aval de la jonction, dans lequel chaque conduite secondaire (8) présente au moins une soupape (6) réalisée sous forme de soupape de commutation, et dans lequel les soupapes (6, 10) sont reliées à une unité de commande (2) et la fonction des soupapes (6) peut être commandée à l'aide de l'unité de commande (2).

2. Dispositif selon la revendication 1, **caractérisé en ce que** les soupapes (6, 10) sont réalisées pour commander de la vapeur surchauffée, de la vapeur saturée, un fluide caloporteur et/ou caloporteur frigorigène.

3. Dispositif selon la revendication 2, **caractérisé en ce que** la combinaison de l'agencement des soupapes (6, 10) et de l'unité de commande (2) réalise pour au moins un circuit de régulation (4) la combinaison d'une régulation P ainsi que d'une régulation PI ou PID séquentielle.

4. Dispositif selon au moins l'une des revendications précédentes, **caractérisé en ce qu'**il présente au moins un capteur (11) associé à chaque circuit de régulation (4) .

5. Dispositif selon la revendication 4, **caractérisé en ce que** le capteur (11) est réalisé sous forme de capteur de température.

6. Dispositif selon au moins l'une des revendications précédentes, **caractérisé en ce qu'**il présente un régulateur pour mettre en œuvre une régulation P et/ou une régulation PI et/ou PID pour commander les états de soupape.

7. Presse de vulcanisation permettant de vulcaniser des pneus, **caractérisée en ce qu'**elle présente un dispositif de commande de soupapes (1) selon l'une quelconque des revendications 1 à 5 pour commander le chauffage d'au moins deux sous-ensembles de la presse de vulcanisation.

8. Utilisation d'un dispositif selon l'une quelconque des revendications 1 et 2 dans la zone d'une presse de vulcanisation de pneu.

9. Procédé de commande de soupapes (6, 10), dans lequel des soupapes (6, 10) sont disposées dans la zone de conduites destinées à un fluide, dans lequel le fluide est amené à un circuit de régulation associé (4) respectivement à travers au moins une conduite primaire (3), et une grandeur de régulation du circuit de régulation (4) est influencée, et dans lequel, dans une étape de procédé, les valeurs actuelles de la grandeur de régulation dans le circuit de régulation respectif (4) peuvent être détectées directement ou indirectement à l'aide d'un capteur (11), et dans lequel l'écart de la valeur réelle de la grandeur de régulation par rapport à une valeur de consigne est déterminé, et dans lequel une régulation de la commande des soupapes (6, 10) associées à un circuit de régulation (4) est effectuée en fonction de la grandeur de régulation, et dans lequel les soupapes (6, 10) sont pilotées à l'aide d'une unité de commande (2) de telle sorte que le fluide s'écoule selon les états de soupape à travers les conduites dans lesquelles sont disposées les soupapes (6, 10) respectives,
**caractérisé en ce qu'**au moins deux soupapes (6) réalisées sous forme de soupapes de commutation sont disposées respectivement dans une conduite primaire (3), et au moins une soupape de régulation (10) est disposée dans au moins une conduite d'alimentation secondaire (7), et respectivement au moins une soupape (6) réalisée sous forme de soupape de commutation est disposée respectivement dans une conduite secondaire (8) bifurquant de la conduite d'alimentation secondaire (7), et dans lequel, dans respectivement une étape de procédé, les soupapes (6) disposées dans les conduites primaires (3) sont pilotées en ce sens qu'elles sont ouvertes ou fermées, et dans une autre étape de procédé, au moins l'une des soupapes (6) disposées dans une conduite secondaire (8) est ouverte, et dans une autre étape de procédé, la soupape de régulation (10) est pilotée pour régler le débit volumique du fluide s'écoulant à travers la conduite d'alimentation secondaire (7) de sorte que le débit volumique du fluide à travers la conduite d'alimentation secondaire s'additionne au débit volumique du fluide à travers au moins une conduite primaire (3) pour au moins un circuit de régulation (4).

10. Procédé selon la revendication 9, **caractérisé en ce que** dans une étape de procédé, le circuit de régulation (4) ayant le plus grand écart de valeur de consigne et de valeur réelle est déterminé, et **en ce que** dans une étape de procédé suivante, seule ladite une soupape (6) associée à ce circuit de régulation (4) et disposée dans une conduite secondaire (8) est ouverte.

11. Procédé selon au moins l'une des revendications 9 et 10, **caractérisé en ce que** le pilotage des états de soupape des soupapes disposées dans les conduites primaires est effectué par une régulation P, et **en ce que** le pilotage des états de soupape de ladite au moins une soupape de régulation (10) disposée dans la conduite d'alimentation secondaire (7) est effectué par une régulation PI ou PID.

12. Procédé selon au moins l'une des revendications 9 à 11, **caractérisé en ce qu'**une régulation de température du circuit de régulation est effectuée.

13. Procédé selon au moins l'une des revendications 9 à 12, **caractérisé en ce qu'**un dispositif selon l'une quelconque des revendications 1 à 6 est utilisé.
